# EUROPÄISCHE PATENTANMELDUNG

(11) **EP 2 026 603 A2**
(43) Veröffentlichungstag der Anmeldung: **18.02.2009**
(21) Anmeldenummer: 08104474.5
(22) Anmeldetag: 19.06.2008
(51) Int. Cl.: H04R 25/00

(54) **Hörvorrichtung mit linearem Schalter**

(30) Priorität: 20.07.2007 DE 102007033876
(71) Anmelder: Siemens Medical Instruments Pte. Ltd., Singapore 139959 (SG)
(72) Erfinder: Beyfuß, Stefanie, 91052 Erlangen (DE); Fickweiler, Werner, 91088 Bubenreuth (DE); Kral, Holger, 90766 Fürth (DE)
(74) Vertreter: Maier, Daniel Oliver

(57) **Zusammenfassung**

Das der Erfindung zugrunde liegende Problem besteht darin, ein Ein- bzw. Ausschalten einer Hörvorrichtung bei zuverlässigem Aufbau einem Benutzer zu erleichtern. Hierzu wird eine Hörvorrichtung mit einem Batteriefach (19) zur Aufnahme einer Batterie (5) und einem Betätigungselement (10) zum Einschalten und/oder Ausschalten der Hörvorrichtung bereitgestellt. Das Betätigungselement (10) ist dabei an dem Batteriefach (19) angeordnet. Die Hörvorrichtung umfasst ein Kontaktelement (14), das eine Kontaktstelle (20) aufweist, und das in einer ersten Stellung des Betätigungselements über die Kontaktstelle (20) ein elektrisches Potential an der Batterie (5) abgreift. Der Grundgedanke besteht hierbei darin, dass das Betätigungselement (10) in einer gegenüber der ersten Stellung linear verschobenen zweiten Stellung das Kontaktelement (14) an einem von der Kontaktstelle (20) verschiedenen Abhebeabschnitt des Kontaktelements (14) abhebt, um die Kontaktstelle (20) des Kontaktelements (14) von der Batterie (5) zu entfernen. Somit wird erreicht, dass die Kontaktstelle (20) des Kontaktelements (14) nur die Batterie (5) und keine weiteren Stoffe berühren kann, so dass ein Abkratzen von Materialen und somit eine Unterbrechung eines Stromkreises vermieden wird. Darüber hinaus wird dadurch gewährleistet, dass immer eine gleiche greifbare Fläche des Betätigungselements (10) dem Benutzer zur Verfügung steht.

## Beschreibung

Die vorliegende Erfindung betrifft eine Hörvorrichtung mit einem Batteriefach zur Aufnahme einer Batterie, einem Betätigungselement zum Einschalten und/oder Ausschalten der Hörvorrichtung, das an dem Batteriefach angeordnet ist und einem Kontaktelement, das eine Kontaktstelle aufweist, und das in einer ersten Stellung des Betätigungselements über die Kontaktstelle ein elektrisches Potential an der Batterie abgreift. Unter dem Begriff Hörvorrichtung wird hier insbesondere ein Hörgerät verstanden. Darüber hinaus fallen unter den Begriff aber auch andere tragbare und nicht tragbare akustische Geräte wie Headsets, Kopfhörer und dergleichen.

Hörgeräte sind tragbare Hörvorrichtungen, die zur Versorgung von Schwerhörenden dienen. Um den zahlreichen individuellen Bedürfnissen entgegenzukommen, werden unterschiedliche Bauformen von Hörgeräten wie Hinter-dem-Ohr-Hörgeräte (HdO), Hörgerät mit externem Hörer (RIC: receiver in the canal) und In-dem-Ohr-Hörgeräte (IdO), z.B. auch Concha-Hörgeräte oder Kanal-Hörgeräte (ITE, CIC), bereitgestellt. Die beispielhaft aufgeführten Hörgeräte werden am Außenohr oder im Gehörgang getragen. Darüber hinaus stehen auf dem Markt aber auch Knochenleitungshörhilfen, implantierbare oder vibrotaktile Hörhilfen zur Verfügung. Dabei erfolgt die Stimulation des geschädigten Gehörs entweder mechanisch oder elektrisch.

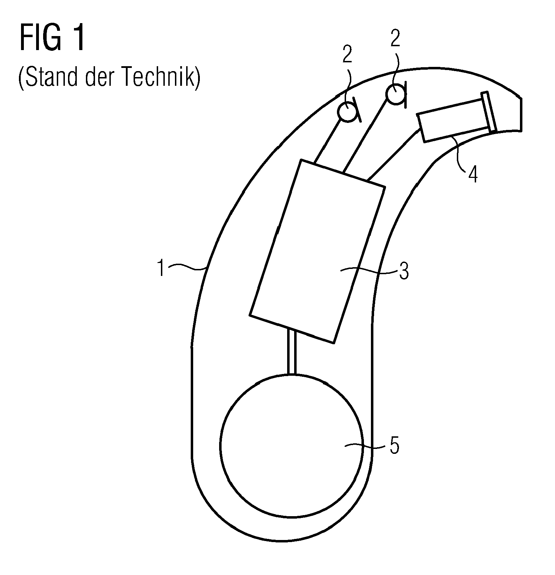

Hörgeräte besitzen prinzipiell als wesentliche Komponenten einen Eingangswandler, einen Verstärker und einen Ausgangswandler. Der Eingangswandler ist in der Regel ein Schallempfänger, z. B. ein Mikrofon, und/oder ein elektromagnetischer Empfänger, z. B. eine Induktionsspule. Der Ausgangswandler ist meist als elektroakustischer Wandler, z. B. Miniaturlautsprecher, oder als elektromechanischer Wandler, z. B. Knochenleitungshörer, realisiert. Der Verstärker ist üblicherweise in eine Signalverarbeitungseinheit integriert. Dieser prinzipielle Aufbau ist in FIG 1 am Beispiel eines Hinter-dem-Ohr-Hörgeräts dargestellt. In ein Hörgerätegehäuse 1 zum Tragen hinter dem Ohr sind ein oder mehrere Mikrofone 2 zur Aufnahme des Schalls aus der Umgebung eingebaut. Eine Signalverarbeitungseinheit 3, die ebenfalls in das Hörgerätegehäuse 1 integriert ist, verarbeitet die Mikrofonsignale und verstärkt sie. Das Ausgangssignal der Signalverarbeitungseinheit 3 wird an einen Lautsprecher bzw. Hörer 4 übertragen, der ein akustisches Signal ausgibt. Der Schall wird gegebenenfalls über einen Schallschlauch, der mit einer Otoplastik im Gehörgang fixiert ist, zum Trommelfell des Geräteträgers übertragen. Die Stromversorgung des Hörgeräts und insbesondere die der Signalverarbeitungseinheit 3 erfolgt durch eine ebenfalls ins Hörgerätegehäuse 1 integrierte Batterie 5.

Hörgeräte verfügen üblicherweise über einen Schalter und können somit jederzeit ein- bzw. ausgeschaltet werden. Aus der Druckschrift US 3,475,566 ist ein Hörgerät mit einem Batteriefach und einem Schalter bekannt, wobei wesentlich ist, dass der Schalter als ein Drehring ausgebildet ist, der ein Betätigungselement aufweist, mittels welchem der Drehring zum Ein- bzw. Ausschalten des Hörgeräts drehbar ist. Durch Drehen des Drehrings wird die Batterie von einem Kontaktelement entfernt und der Stromkreis unterbrochen. Hierbei ist problematisch, dass das Betätigungselement beim Drehen des Drehrings insbesondere in den Endstellungen weniger von dem Betätigungselement aus dem Gehäuse herausragt, so dass die greifbare Fläche des Betätigungselements kleiner wird. Gerade für ältere und sehr junge Hörgeräteträger stellt dies häufig ein großes Problem dar und macht die Verwendung des Hörgeräts unkomfortabel, denn das Betätigungselement ist, gerade an den Stellen, die den ein- bzw. ausgeschalteten Zustand des Hörgeräts darstellen, schwer greifbar.

Darüber hinaus offenbart die Druckschrift US 4,230,777 einen Schalter für ein Kommunikationsgerät, mit einem Drehknopf, der zur Aufnahme einer Batterie ausgebildet ist. Dabei stellt der Drehknopf ein Gehäuse für die Batterie dar, so dass durch Drehen des Drehknopfs auch die Batterie mitgedreht wird. Der Schalter umfasst ferner zwei Kontaktelemente, die auf einem Deckel des Drehknopfs aufliegen. Der Deckel des Drehknopfs weist ferner zwei Öffnungen auf, in welche die Kontaktelemente hineinragen, sobald der Drehknopf entsprechend gedreht wird. Auf diese Weise wird ein Stromkreis geschlossen und das Gerät eingeschaltet. Nachteilig ist, dass die beiden Kontaktelemente dauernd den Deckel des Drehknopfs berühren, was durch Drehen des Drehknopfs zu einem Abreiben vom Material des Deckels und somit durch die abgeriebenen Späne zum Unterbrechen des Stromkreises führen kann. Außerdem besteht hierbei immer noch das Problem, dass die greifbare Fläche des Drehknopfs nicht ganz erreichbar ist.

Die Aufgabe der vorliegenden Erfindung besteht somit darin, ein zuverlässiges Ein- und Ausschalten einer Hörvorrichtung zu ermöglichen.

Diese Aufgabe wird erfindungsgemäß gelöst durch eine Hörvorrichtung mit einem Batteriefach zur Aufnahme einer Batterie, einem Betätigungselement zum Einschalten und/oder Ausschalten der Hörvorrichtung, das an dem Batteriefach angeordnet ist und einem Kontaktelement, das eine Kontaktstelle aufweist, und das in einer ersten Stellung des Betätigungselements über die Kontaktstelle ein elektrisches Potential an der Batterie abgreift, wobei das Betätigungselement in einer gegenüber der ersten Stellung linear verschobenen zweiten Stellung das Kontaktelement an einem von der Kontaktstelle verschiedenen Abhebeabschnitt des Kontaktelements abhebt, um die Kontaktstelle des Kontaktelements von der Batterie abzuheben.

In vorteilhafter Weise wird somit erreicht, dass die Kontaktstelle des Kontaktelements lediglich die Batterie und keine weiteren Stoffe berührt, weil das Kontaktelement nicht direkt an der Kontaktstelle abgehoben wird. Dadurch bleibt die Kontaktstelle des Kontaktelements von dem Betätigungselement unberührt, was die Zuverlässigkeit des elektrischen Kontakts zu der Batterie erhöht. Darüber hinaus wird durch die lineare Bewegung des Betätigungselements gewährleistet, dass die greifbare Fläche des Betätigungselements immer gleich bleibt, so dass das Betätigungselement von einem Benutzer besonders komfortabel greifbar ist. Dadurch, dass lediglich eine Bewegung des Kontaktelements zum Ein- bzw. Ausschalten der Hörvorrichtung ausgeführt wird, muss keine Bewegung der Batterie stattfinden, was ein besonders zuverlässiges Schließen bzw. Öffnen des Stromkreises zur Folge hat. Ein weiterer Vorteil besteht darin, dass das Batteriefach selbst von komplizierter Mechanik befreit wird, was sich in der Robustheit der Hörvorrichtung auswirkt.

Bevorzugt weist der Abhebeabschnitt des Kontaktelements eine Anlaufschräge auf, an welcher das Betätigungselement das Kontaktelement abhebt, und wobei die Anlaufschräge derart ausgebildet ist, dass eine Bewegung des Betätigungselements von der ersten zu der zweiten Stellung eine im Wesentlichen dazu senkrechte Bewegung des Kontaktelements bewirkt. Somit kann das Kontaktelement besonders zuverlässig abgehoben und von der Batterie entfernt werden. Mit einer Anlaufschräge wird erreicht, dass das Betätigungselement lediglich durch ein lineares Verschieben das Kontaktelement direkt an der Anlaufschräge abheben kann.

Optional kann das Betätigungselement in der zweiten Stellung das Kontaktelement von der Batterie mittels eines Hebelarms abhebt, der derart ausgebildet ist, dass eine Bewegung des Betätigungselements von der ersten zu der zweiten Stellung eine im Wesentlichen dazu parallele Bewegung des Kontaktelements bewirkt. In vorteilhafter Weise kann somit das Kontaktelement in größerer Entfernung von dem Betätigungselement angeordnet werden, was eine gewisse Freiheit beim Anordnen des Befestigungselements an der Hörvorrichtung zur Folge hat.

In bevorzugter Weise weist das Betätigungselement eine Rastnase auf, die in mindestens einer Stellung des Betätigungselements in eine Aussparung eines Gehäuses oder eines Rahmens der Hörvorrichtung hineinragt, um das Betätigungselement stabil zu halten. Mit der Rastnase wird ein robuster Aufbau erreicht und darüber hinaus gewährleistet, dass beim Verschieben des Betätigungselements das Hineinragen der Rastnase in eine Öffnung auf einen vorbestimmten Zustand der Hörvorrichtung hindeutet. Selbstverständlich kann auch vorgesehen sein, dass das Betätigungselement eine Aussparung und das Gehäuse oder der Rahmen eine korrespondierende Rastnase aufweist.

Die vorliegende Erfindung wird anhand der beigefügten Zeichnungen näher erläutert, in denen zeigen:
- FIG 1: einen schematischen Aufbau eines Hinter-dem-Ohr- Hörgeräts;
- FIG 2: ein Hinter-dem-Ohr-Hörgerät mit einem Betätigungsele- ment zum Ein- bzw. Ausschalten des Hörgeräts;
- FIG 3: ein Batteriefach mit dem Betätigungselement in einer ersten Stellung;
- FIG 4: das Batteriefach mit dem Betätigungselement in einer zweiten Stellung;
- FIG 5: in schematischer Darstellung das Batteriefach mit dem Betätigungselement in der ersten Stellung;
- FIG 6: in schematischer Darstellung das Batteriefach mit dem Betätigungselement in der zweiten Stellung;
- FIG 7: das Betätigungselement mit einer Rastnase.

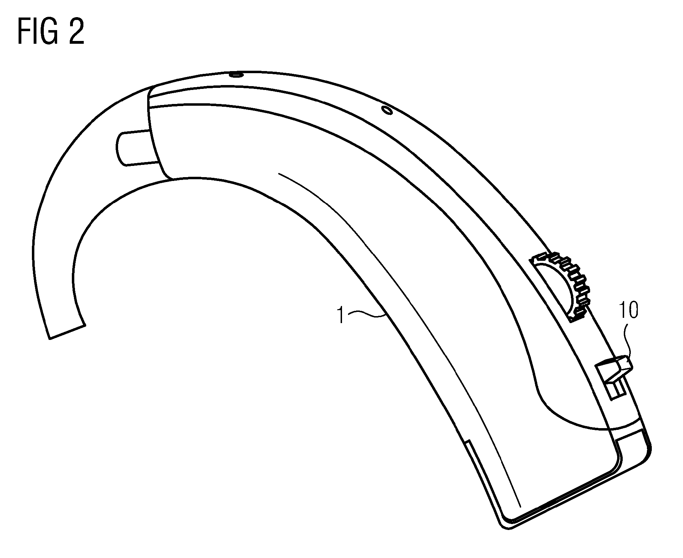

Bei einem in FIG 2 dargestellten Hinter-dem-Ohr-Hörgerät ist ein aus einem Gehäuse 1 herausragendes Betätigungselement 10 zum Ein- bzw. Ausschalten des Hörgeräts vorgesehen.

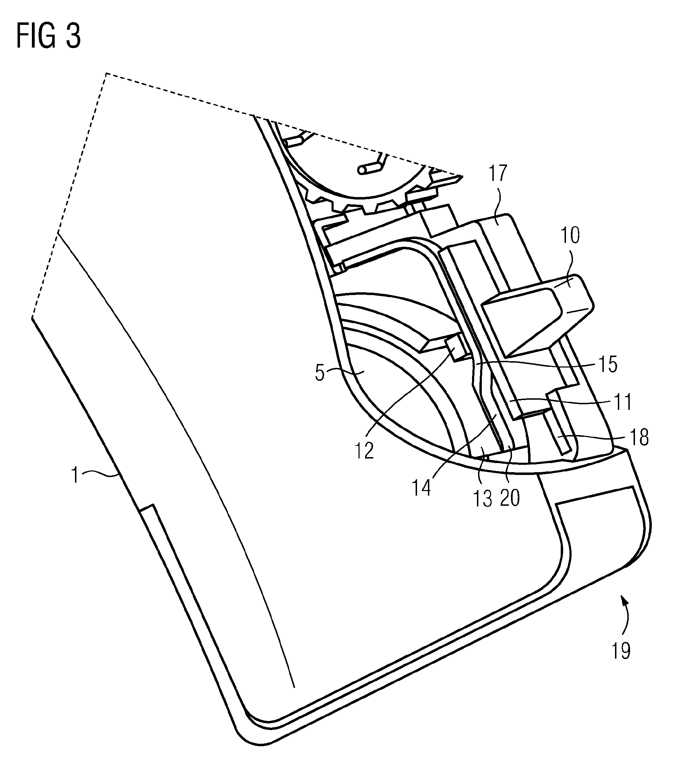

Wie in FIG 3 wiedergegeben, ist das Betätigungselement 10 an einem Batteriefach 19 des Hörgeräts angeordnet. Das Betätigungselement 10 weist eine Schiebeplatte 11 auf, die in einen Ausschnitt 18 eines Rahmens 17 aufgenommen ist. Somit kann das Betätigungselement 10 entlang des Ausschnitts 18 verschoben werden. Darüber hinaus umfasst das Betätigungselement 10 ein quaderförmiges Abhebeelement 12, das an der Schiebeplatte 11 an einer gegenüber dem Betätigungselement 10 liegenden Seite der Schiebeplatte 11 angeordnet ist. Das Wesentliche hierbei ist, dass das Betätigungselement 10 aus dem Rahmen 17 und somit aus dem Gehäuse 1 des Hörgeräts hinausragt, und dass das lineare Verschieben des Betätigungselements 10 entlang des Ausschnitts 18 keinen Einfluss auf die greifbare Fläche des Betätigungselements 10 hat.

Wie ebenfalls in FIG 3 dargestellt, befindet sich in dem Batteriefach 19 eine Batterie 5. In einer ersten in FIG 3 gezeigten Stellung des Betätigungselements 10 liegt an einer Abgreiffläche 13 der Batterie 5 ein Kontaktelement 14 an, das dort ein elektrisches Potential abgreift. Somit ist ein Stromkreis geschlossen und das Hörgerät eingeschaltet. Dabei berührt das Kontaktelement 14 die Batterie 5 lediglich über eine Kontaktstelle 20, die an einem Ende des Kontaktelements 14 angeordnet ist. Darüber hinaus weist das Kontaktelement 14 eine Anlaufschräge 15 auf, an der das Kontaktelement 14 abgehoben und von der Batterie entfernt werden kann. Die Kontaktstelle 20 ist von der Anlaufschräge 15 deutlich beabstandet.

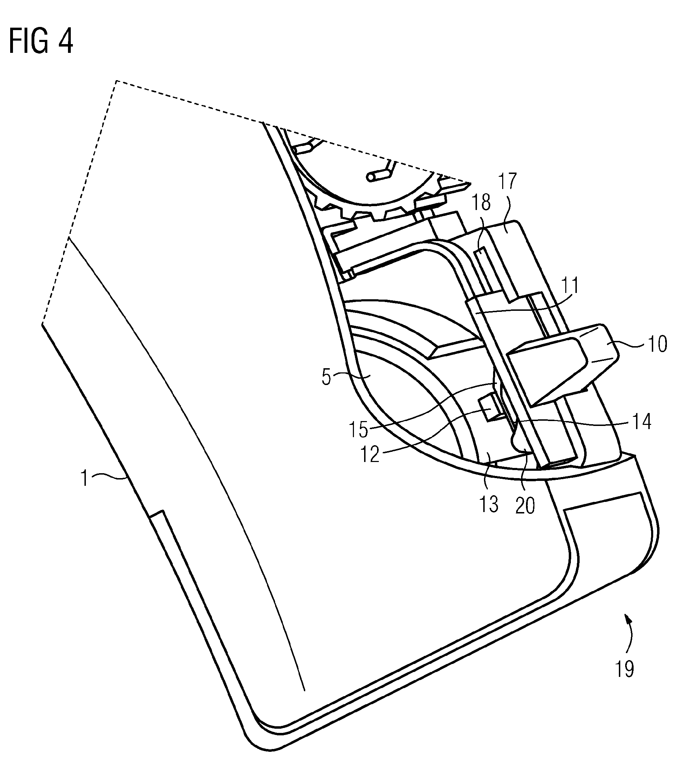

In einer in FIG 4 gezeigten zweiten Stellung des Betätigungselements 10, die durch ein lineares Verschieben des Betätigungselements 10 erreicht wird, hebt das Abhebeelement 12 das Kontaktelement 14 an dem Abhebeabschnitt 15 ab. Zu erkennen ist, dass das lineare Verschieben des Betätigungselements 10 entlang des Ausschnitts 18 eine Bewegung des Kontaktelements 14 im Wesentlichen senkrecht zu dem Ausschnitt 18 bewirkt, was auf die Anlaufschräge 15 des Kontaktelements 14 zurückzuführen ist. Gegebenenfalls, wenn das Kontaktelement 14 nicht unmittelbar durch das Abhebeelement 12, sondern mittels eines Hebelarms abgehoben wird, der im Wesentlichen parallel zu der Schiebeplatte 11 angeordnet werden kann, und wenn das Kontaktelement beispielsweise senkrecht zu dem Ausschnitt 18 angeordnet ist, kann die lineare Verschiebung des Betätigungselements 10 entlang des Ausschnitts 18 eine zu dem Ausschnitt 18 ebenfalls parallele Bewegung des Kontaktelements zur Folge haben.

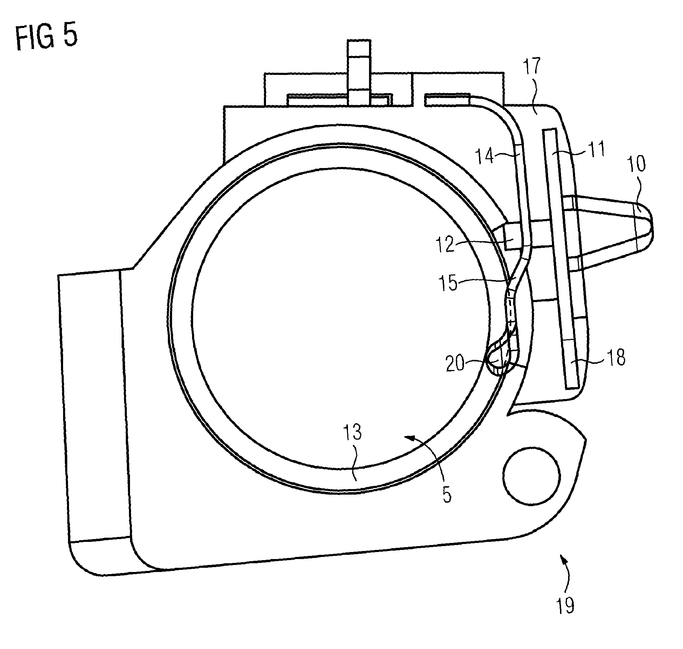

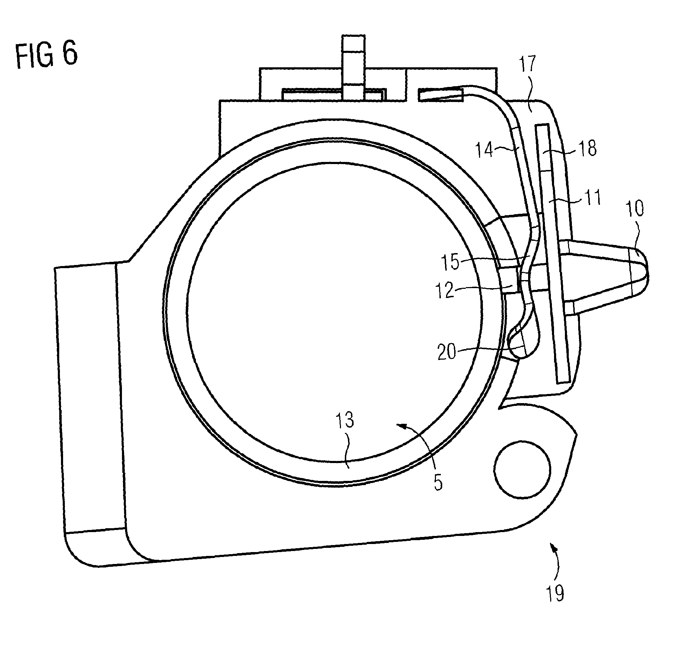

Anhand eines in FIG 5 gezeigten schematischen Aufbaus des Batteriefachs 19 ist die erste Stellung des Betätigungselements 10 wiedergegeben. Hierbei ist noch deutlicher zu erkennen, dass das elektrische Potential an der Abgreiffläche 13 der Batterie 5 von dem Kontaktelement 14 lediglich über die Kontaktstelle 20 abgegriffen wird. Durch eine Verschiebung des Betätigungselements 10, wie in FIG 6, wird das Kontaktelement 14 durch das Abhebelelement 12 an der Anlaufschräge 15 abgehoben und somit die Kontaktstelle 20 des Kontaktelements 14 von der Batterie entfernt. Weil die Kontaktstelle 20 des Kontaktelements 14 nur die Abgreiffläche 13 der Batterie 5 und keine weiteren Stoffe berühren kann, wird dadurch ein Abkratzen von Material vermieden und die Kontaktstelle 20 bleibt immer kontaktfähig.

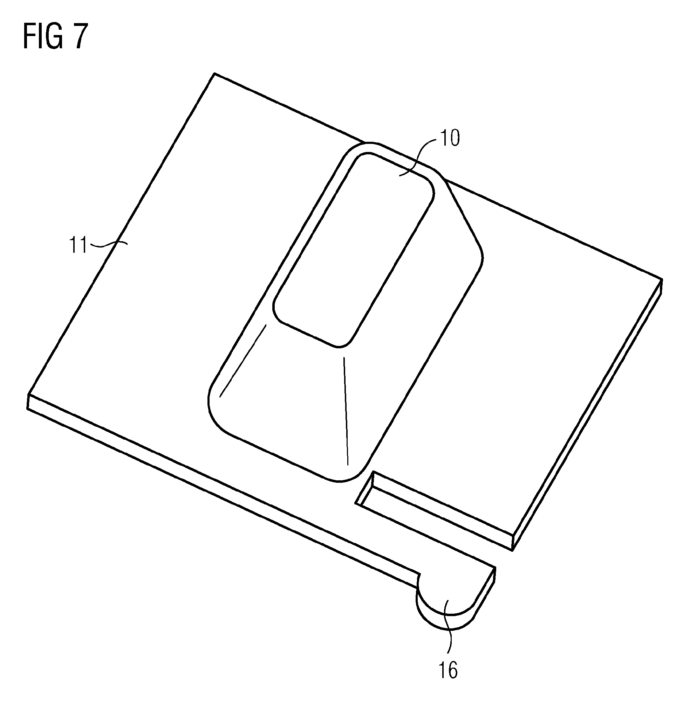

Die Schiebeplatte 11 des in FIG 7 wiedergegebenen Betätigungselements 10 weist eine Rastnase 16 auf, die in der ersten und zweiten Stellung des Betätigungselements 10 in jeweils eine Aussparung im Rahmen oder Gehäuse des Hörgeräts hineinragt. Somit wird eine Stabilität des Betätigungselements 10 erreicht und einem Hörgeräteträger haptisch darauf hingedeutet, dass sich das Betätigungselement 10 in der ersten bzw. zweiten Stellung befindet und das Hörgerät ein- bzw. ausgeschaltet ist.

## Patentansprüche

1. Hörvorrichtung mit
- einem Batteriefach (19) zur Aufnahme einer Batterie (5),
- einem Betätigungselement (10) zum Einschalten und/oder Ausschalten der Hörvorrichtung, das an dem Batteriefach (19) angeordnet ist und
- einem Kontaktelement (14), das eine Kontaktstelle (20) aufweist, und das in einer ersten Stellung des Betätigungselements (10) über die Kontaktstelle (20) ein elektrisches Potential an der Batterie (5) abgreift,
**dadurch gekennzeichnet, dass**
- das Betätigungselement (10) in einer gegenüber der ersten Stellung linear verschobenen zweiten Stellung das Kontaktelement (14) an einem von der Kontaktstelle (20) verschiedenen Abhebeabschnitt (15) des Kontaktelements (14) abhebt, um die Kontaktstelle (20) des Kontaktelements (14) von der Batterie (5) abzuheben.

2. Hörvorrichtung nach Anspruch 1, wobei der Abhebeabschnitt (15) des Kontaktelements (14) eine Anlaufschräge (15) aufweist, an welcher das Betätigungselement (10) das Kontaktelement (14) abhebt, und wobei die Anlaufschräge (15) derart ausgebildet ist, dass eine Bewegung des Betätigungselements (10) von der ersten zu der zweiten Stellung eine im Wesentlichen dazu senkrechte Bewegung des Kontaktelements (14) bewirkt.

3. Hörvorrichtung nach Anspruch 1, wobei das Betätigungselement (10) in der zweiten Stellung das Kontaktelement (14) von der Batterie (5) mittels eines Hebelarms abhebt, der derart ausgebildet ist, dass eine Bewegung des Betätigungselements (10) von der ersten zu der zweiten Stellung eine im Wesentlichen dazu parallele Bewegung des Kontaktelements (14) bewirkt.

4. Hörvorrichtung nach einem der vorhergehenden Ansprüche, wobei das Betätigungselement (10) eine Rastnase (16) aufweist, die in mindestens einer Stellung des Betätigungselements (10) in eine Öffnung eines Gehäuses (1) oder eines Rahmens (17) der Hörvorrichtung hineinragt, um das Betätigungselement (10) stabil zu halten.
